Europäisches Patentamt

(19) European Patent Office

Office européen des brevets

(11) Numéro de publication: **0 108 432**
**B1**

(12) **FASCICULE DE BREVET EUROPEEN**

(45) Date de publication du fascicule du brevet:
**06.08.86**

(21) Numéro de dépôt: **83201343.7**

(22) Date de dépôt: **19.09.83**

(51) Int. Cl.⁴: **C 08 F 2/00**, C 08 F 10/00

(54) Procédé pour l'inhibition du croûtage de réacteurs utilisés pour la polymérisation d'alpha-oléfines.

(30) Priorité: **04.10.82 FR 8216722**

(43) Date de publication de la demande:
**16.05.84 Bulletin 84/20**

(45) Mention de la délivrance du brevet:
**06.08.86 Bulletin 86/32**

(84) Etats contractants désignés:
**AT BE DE FR GB IT NL**

(56) Documents cités:
**FR - A - 1 179 637**

(73) Titulaire: **SOLVAY & Cie (Société Anonyme), Rue du Prince Albert, 33, B-1050 Bruxelles (BE)**

(72) Inventeur: **Bienfait, Charles, Rua Virgilio Grisson, 111, Sao Paulo Interlagos (BR)**
Inventeur: **Demiddeleer, Léopold, Steenput, 5, B-1960 Sterrebeek (BE)**

## Description

La présente invention concerne un procédé pour l'inhibition du croûtage de réacteurs utilisés pour la polymérisation d'alpha-oléfines en présence de particules de solides catalytiques contenant du titane et du chlore à l'état combiné.

Les systèmes catalytiques comprenant un composé de métal de transition, généralement un composé halogéné du titane, et un composé organométallique, généralement un composé organoaluminique, sont bien connus, sous la dénomination de «catalyseurs du type Ziegler», pour polymériser les oléfines à basse pression.

Ces systèmes catalytiques ont fait l'objet de perfectionnements qui ont permis de les utiliser pour polymériser les alpha-oléfines, en particulier l'éthylène et le propylène, avec des performances telles que l'épuration ultérieure en résidus catalytiques des polymères obtenus a pu être considérablement simplifiée et même totalement supprimée. Ces systèmes catalytiques du type Ziegler dits «de la seconde génération» comprennent généralement un solide catalytique en particules contenant du titane et du chlore à l'état combiné. Ce solide est choisi le plus souvent soit parmi les chlorures réduits du titane ayant subi un traitement d'activation pour améliorer les performances, soit parmi les solides obtenus par réaction chimique d'un composé du titane avec un composé du magnésium. On a déjà proposé de modifier des particules de solides catalytiques de ce genre en les mettant en présence d'alpha-oléfines dans des conditions conduisant à la formation de faibles quantités de prépolymères associées aux solides catalytiques. Cette modification peut présenter divers avantages tels que le maintien, dans le temps, des propriétés catalytiques, l'amélioration de la solidité, de la stabilité et des propriétés mécaniques, et l'amélioration des propriétés, et notamment de la morphologie, des polymères obtenus grâce à un contrôle plus aisé des conditions de polymérisation. Généralement, la quantité relative de prépolymère associée aux particules est faible de sorte que le prépolymère présente nécessairement un poids moléculaire moyen faible. Or, on a constaté que les parois des réacteurs dans lesquels les particules modifiées sont produites se couvrent de dépôts qui se présentent généralement sous la forme de vaselines ou de croûtes plus ou moins dures et adhérentes.

Par ailleurs, on a également observé que des dépôts du même genre se forment sur les parois des réacteurs utilisés pour la polymérisation d'alpha-oléfines en présence de particules de solides catalytiques, modifiées ou non, lorsque la polymérisation est opérée dans des conditions conduisant à des polymères contenant une fraction importante de chaînes polymériques de poids moléculaires faible.

Dans tous les cas, ces dépôts doivent être éliminés par des nettoyages fréquents, pénibles et coûteux, des parois des réacteurs.

La présente invention vise à diminuer dans une très large mesure et même à éviter complètement la formation de ces dépôts sur les parois des réacteurs.

La présente invention concerne à cet effet un procédé pour l'inhibition du croûtage de réacteurs utilisés pour la polymérisation d'alpha-oléfines en présence de particules de solides catalytiques contenant du titane et du chlore à l'état combiné, selon lequel on opère la polymérisation en présence d'une quantité d'une huile de silicone inférieure à 1% en poids par rapport au poids de solide catalytique.

Par «polymérisation d'alpha-oléfines», on entend désigner aussi bien les fabrications conventionnelles de polymères d'alpha-oléfines que les modifications de particules de solides catalytiques par la formation de faibles quantités de prépolymères, encore appelées «prépolymérisations».

Les meilleurs résultats, en ce qui concerne l'inhibition du croûtage, ont été enregistrés au cours de ces prépolymérisations.

La polymérisation conventionnelle d'alpha-oléfines en présence d'un système catalytique du type Ziegler peut être effectuée, comme on le sait, en solution ou en suspension dans un solvant ou un diluant hydrocarboné (1), en phase gazeuse ou encore dans le monomère maintenu à l'état liquide. Le solvant ou diluant (1) est de préférence un alkane ou cycloalkane, tel que l'isobutane, le pentane, l'hexane, l'heptane, le cyclohexane ou leurs mélanges, et en particulier l'hexane. La pression de polymérisation est comprise en général entre la pression atmosphérique et 100 bars et la température entre 20 et 200°C.

Le composé organométallique est généralement un composé organoaluminique (2) de formule $AlR_nX_{3-n}$ dans laquelle R est un radical hydrocarboné comprenant de 1 à 20 atomes de carbone, X est un halogène et n est un nombre tel que $0 < n \leq 3$. R est choisi de préférence parmi les radicaux alkyle, alkényle, aryle, cycloalkyle, arylalkyle, alkylaryle. Les meilleurs résultats sont obtenus lorsque R est un radical alkyle linéaire ou branché comprenant de 1 à 8 atomes de carbone. Lorsque le composé organoaluminique contient un halogène, celui-ci est de préférence le chlore. A titre d'exemple de composés organoaluminiques (2) fréquemment utilisés, on peut citer les triéthyl-, triisobutyl-, trihexyl- et trioctylaluminium et les chlorures d'éthylaluminium.

On peut aussi utiliser des composés organoaluminiques (2) obtenus en faisant réagir des trialkylaluminiums ou des hydrures de dialkylaluminium dont les radicaux comprennent de 1 à 20 atomes de carbone avec des dioléfines comprenant de 4 à 20 atomes de carbone et plus particulièrement les composés dénommés isoprénylaluminiums.

Les prépolymérisations peuvent être effectuées dans les conditions générales mentionnées ci-dessus en rapport avec la polymérisation conventionnelle, les conditions particulières de ces prépolymérisations étant mentionnées ci-après.

La prépolymérisation peut être effectuée dans le milieu de préparation des particules de solide catalytique. Elle peut aussi être effectuée après séparation des particules de leur milieu de préparation et lavage éventuel, soit sur les particules telles quelles, soit sur les particules remises en suspension, directement ou après stockage, dans un diluant hydrocarboné liquide frais, tels que les diluants (1) mentionnés plus haut, si nécessaire en présence d'une quantité de composé organoaluminique (2) suffisante pour la formation du prépolymère.

Lorsque la prépolymérisation est effectuée dans le milieu de préparation des particules de solide catalytique, elle peut avoir lieu en l'absence de composé organoaluminique (2) lorsque le solide catalytique sur lequel elle est effectuée contient des résidus de pareil composé en quantité suffisante. La prépolymérisation est conduite en général de manière à associer aux particules de solide catalytique une quantité de polymère d'alpha-oléfine représentant de 1 à 1000% du poids du solide catalytique, le plus souvent de 3 à 100%, et de préférence de 5 à 50% de ce poids.

D'autres détails relatifs à des traitements de prépolymérisation effectués sur des solides catalytiques contenant du titane et du chlore à l'état combiné peuvent être trouvés dans les brevets US-A-4 295 991 (EXXON RESEARCH AND ENGINEERING CO), US-A-4 235 747 et US-A-4 324 693 [STANDARD OIL COMPANY (Indiana)] et dans la demande de brevet EP-A-0 045 969 (PHILLIPS PETROLEUM COMPANY).

L'alpha-oléfine à partir de laquelle le polymère est formé est choisie généralement parmi les alpha-monooléfines contenant de 2 à 18 et de préférence de 2 à 8 atomes de carbone dans leur molécule, en particulier l'éthylene et le propylène, ainsi que leurs mélanges.

Les solides catalytiques en particules contenant du titane et du chlore à l'état combiné en présence desquels on forme le polymère d'alpha-oléfine sont bien connus. Généralement, il s'agit soit de solides catalytiques à base de trichlorure de titane, appelés ci-après «solides du premier type», soit des solides catalytiques obtenus par réaction chimique d'au moins un composé du magnésium avec au moins un composé du titane, éventuellement avec d'autres composés, appelés ci-après «solides du second type».

Les solides catalytiques du premier type sont préparés, en général, en réduisant, de manière connue, le tétrachlorure de titane par l'aluminium ou par un composé organoaluminique (2) et en soumettant les solides réduits ainsi obtenus à des traitements d'activation propres à stabiliser ou à améliorer leurs performances catalytiques, essentiellement leur aptitude à catalyser la polymérisation des alpha-oléfines avec des rendements supérieurs et aussi, lorsqu'ils sont destinés à catalyser la polymérisation du propylène et des alpha-oléfines supérieures, leur stéréospécificité.

Ces traitements d'activation sont bien connus et ont été amplement décrits dans la littérature. Ils peuvent consister en des broyages, pendant ou après la réduction, éventuellement en présence d'agents complexants, en traitements thermiques des solides réduits, également en présence éventuelle d'agents complexants ou d'autres additifs.

Des détails relatifs aux conditions opératoires des traitements d'activation les plus courants peuvent être trouvés notamment dans le brevet BE-A-864 708 (SUMITOMO CHEMICAL LTD), dans le brevet US-A-4 295 991 (EXXON RESEARCH AND ENGINEERING CO) et dans les documents cités dans ce dernier.

Les solides catalytiques du second type sont préparés en faisant réagir au moins un composés du magnésium avec au moins un composé du titane. A titre de composés du magnésium utilisables pour préparer les solides du second type, on peut citer les composés oxygénés, en particulier les composés oxygénés organiques, par exemple les alkoxides, les composés halogénés, en particulier les chlorures, par exemple les chlorures éventuellement activés par broyage ou par traitement avec des agents complexants, et les composés organomagnésiens, en particulier les alkyl- et arylmagnésiums, par exemple le dibutyl- et le diphénylmagnésium.

A titre de composés du titane utilisables pour préparer les solides du second type, on peut citer les composés inorganiques halogénés, en particulier les chlorures, par exemples le tri- et le tétrachlorure de titane, et les composés oxygénés organiques contenant éventuellement un halogène, en particulier les alkoxydes et halogénoalkoxydes.

Les procédés des préparation des solides du second type font généralement intervenir au moins un troisième constituant que l'on met en contact soit avec le composé du magnésium, soit avec le composé du titane, soit avec le produit résultant de leur réaction. Cette mise en contact peut se faire par tout moyen approprié par exemple par mélange avec ou sans cobroyage et éventuellement en présence d'un diluant hydrocarboné inerte (1).

A titre d'exemples de troisième constituant utilisable pour préparer les solides du second type, on peut citer les agents complexants organiques et des chlorures inorganiques et organiques.

Des détails relatifs aux modes opératoires pour préparer des solides du second type peuvent être trouvés notamment dans les brevets et demandes de brevets énumérés dans l'article de S. Sivaram «Second Generation Ziegler Polyolefin Processes» publié dans Ind. Eng. Chem., Prod. Res. Dev., vol. 16, n° 2, 1977, pages 121 à 128. D'excellentes performances catalytiques ont été enregistrées avec des solides du second type tels que ceux décrits dans les brevets BE-A-791 676, BE-A-799 977 et BE-A-840-378 (SOLVAY & Cie).

Selon l'invention, on opère la polymérisation d'alpha-oléfines en présence d'une huile de silicone.

Par huile de silicone, on entend désigner les fluides contenant un composé qui répond à la formule

$$\left[ \begin{array}{c} R \\ | \\ - Si - O - \\ | \\ R' \end{array} \right]_x$$

dans laquelle R et R' sont identiques ou différents et représentent un radical choisi parmi les radicaux alkyle contenant de 1 à 5 atomes de carbone et les radicaux aryle et dans laquelle x est compris entre 3 et 2000; de préférence R et R' sont identiques et sont des radicaux méthyle ou phényle et x est compris entre 3 et 100. D'excellents résultats ont été enregistrés avec les composés commerciaux dénommés indifféremment «fluides de diméthylsilicone» ou «méthylpolysiloxanes» dans la composition desquels R et R' représentent un radical méthyle, et qui sont caractérisés par des viscosités cinématiques comprises entre 0,5 et $2 \cdot 10^6$ cSt (centistokes) ($5 \cdot 10^{-6}$ à 2 m²/s), de préférence entre 5 et 30000 cSt ($5 \cdot 10^{-5}$ à $3 \cdot 10^{-2}$ m²/s), plus spécialement avec les huiles de silicone commercialisées par exemple par Rhône-Poulenc sous les dénominations RHODORSIL® Huiles 47, par Dow Corning sous les dénominations «fluides n° 200» et par General Electric sous les dénominations «huiles de silicone GE».

L'huile de silicone peut être introduite dans le réacteur de n'importe quelle manière compatible avec sa forme physique. Ainsi, si la formation de polymère est effectuée dans un milieu liquide, tel qu'un diluant hydrocarboné (1), on peut simplement ajouter l'huile de silicone à ce milieu antérieurement à la mise en contact du solide catalytique avec l'alpha-oléfine dans des conditions polymérisantes. Ce mode opératoire est préféré. On peut aussi introduire l'huile de silicone dans le réacteur sous forme de mélange avec un composé organoaluminique (2) lorsqu'on fait usage de pareil composé, ou encore sous forme de mélange avec l'alpha-oléfine elle-même, en particulier lorsque la formation de polymère est effectuée en l'absence de milieu liquide.

La température à laquelle l'huile de silicone est introduite dans le réacteur n'est pas critique et est en général inférieure ou égale à la température de formation du polymère, en veillant toutefois à ce que la fluidité de l'huile reste suffisante.

La quantité d'huile de silicone présente lors de la polymérisation constitue une caractéristique essentielle de l'invention. On a constaté en effet, avec surprise, qu'il suffit d'assurer la présence de quantités très faibles d'huile de silicone dans le réacteur pour éviter l'apparition de dépôts sur ses parois et que ces quantités très faibles ne modifient en aucune manière détectable les propriétés catalytiques du solide catalytique présent. Selon l'invention, on introduit l'huile de silicone dans le réacteur à raison de moins de 1% en poids par rapport au poids de solide catalytique.

En général, la quantité d'huile de silicone présente est comprise entre environ 1 ppm (partie par million) et environ 8000 ppm par rapport au poids de solide catalytique, de préférence entre environ 50 et 5000 ppm. De très bons résultats ont été enregistrés lors de prépolymérisations effectuées sur des solides catalytiques du premier type en présence de 500 à 3000 ppm d'huile de silicone par rapport au poids de solide catalytique et lors de prépolymérisations effectuées sur des solides catalytiques de second type en présence de 100 à 1000 ppm d'huile de silicone par rapport au poids de solide catalytique.

L'invention est illustrée par les exemples ci-après.

*Exemple 1*

On effectue une série de préparations de particules de solide catalytique au moyen des réactifs (1) (2) (3) et (4) définis dans les exemples 1R à 5 du brevet BE-A-840 378 (SOLVAY & Cie) et selon le mode opératoire de l'exemple 2. Le solide catalytique formé n'est pas séparé du milieu réactionnel auquel on ajoute, en fin de préparation, un volume d'huile de silicone, vendue par Rhône-Poulenc sous la dénomination RHODORSIL® Huile 47 V 300, équivalent à 6 ml par kg de solide catalytique (soit environ 500 ppm). Après cette addition, le réacteur contenant la suspension de particules de complexe catalytique solide est mis sous pression d'éthylène, maintenu jusqu'à introduction d'environ 0,1 kg par kg de solide catalytique solide, de manière à obtenir des particules auxquelles est associé un prépolymère contenant environ 10% en poids de polyéthylène. Au cours des opérations de prépolymérisation, on ne constate la formation d'aucun dépôt sur les parois du réacteur contenant la suspension de particules du solide catalytique.

A titre de comparaison, une série de préparations de particules d'un solide catalytique associée à une même quantité de prépolymère d'éthylène mais préparé en l'absence d'huile de silicone, conduit à la formation, sur les parois du réacteur dans lequel s'effectue la prépolymérisation, de croûtes adhérentes qui ne peuvent être enlevées que par lavage au moyen d'hexane chaud.

*Exemple 2*

On effectue un essai de polymérisation avec un solide catalytique en particules préparé à partir des réactifs (1) (2) (3) et (4) définis dans les exemples 1R à 5 du brevet BE-A-840 378, dans les conditions décrites dans ces exemples, en introduisant le solide catalytique dans l'autoclave de polymérisation sous forme d'une suspension dans de l'hexane qui contient en outre l'huile de silicone utilisée à l'exemple 1 à raison de 1 ‰ en poids par rapport au poids de solide catalytique présent dans la suspension.

Dans ces conditions, l'essai de polymérisation se déroule sans qu'on n'observe de croûtage sur les parois de l'autoclave.

*Exemple 3*

On répète, sur un solide catalytique préparé comme décrit à l'exemple 1 du brevet BE-A-799 977 (SOLVAY & Cie) mais non séparé de son milieu de préparation, les étapes d'addition d'huile de silicone et de mise sous pression d'éthylene décrites à l'exemple 1 ci-dessus. On n'observe la formation d'aucun dépôt sur les parois du réacteur contenant la suspension de solide catalytique.

*Exemple 4*

Le mode opératoire des exemples 1 et 3 est répété sur un solide catalytique en particules préparé comme décrit à l'exemple 1a du brevet BE-A-819 609 (SOLVAY & Cie) et remis en suspension dans l'hexane comme indiqué à cet exemple. Au cours de l'opération de prépolymérisation, on n'observe la formation d'aucun dépôt sur les parois du réacteur contenant la suspension de solide catalytique.

*Exemple 5*

Un solide catalytique en particules à base de $TiCl_3$ violet est préparé comme décrit à l'exemple 30 du brevet BE-A-764 251 (SOLVAY & Cie). Ce solide contenant 850 g de $TiCl_3$ par kg est remis en suspension dans de l'hexane frais; dans la suspension on introduit à 0°C et sous agitation du chlorure de diéthylaluminium en quantité telle que le rapport molaire du chlorure de diéthylaluminium au trichlorure de titane présent dans le solide catalytique est 0,25 environ. On introduit ensuite une quantité d'huile de silicone, vendue par Rhône-Poulenc sous la marque RHODORSIL® Huile 47 V 300, équivalent à 1 ‰ en poids de la quantité de solide catalytique présente dans la suspension. On introduit enfin du propylène dans le ciel gazeux du réacteur surmontant la suspension jusqu'à obtention d'un «prépolymère» contenant environ 15% en poids de propylène. Dans ces conditions, la prépolymérisation n'engendre la formation d'aucun dépôt sur les parois de l'enceinte.

*Exemple 6*

Le mode opératoire des exemples 1 et 3 est répété sur un solide catalytique, préparé comme décrit à l'exemple 1.a) du brevet BE-A-834 601 (SOLVAY & Cie) et finalement remis en suspension dans l'hexane. Aucun dépôt n'apparaît sur les parois du réacteur dans lequel s'effectue la prépolymérisation.

*Exemple 7* (comparatif)

La préparation du solide catalytique décrite à l'exemple 1 du brevet BE-A-780 758 (SOLVAY & Cie) est répété en effectuant une étape supplémentaire consistant à introduire, dans le ciel gazeux de l'enceinte de préparation du «solide réduit», non séparé du milieu de réduction, du propylène à environ 60°C, sous une pression de 3 bars et jusqu'à obtention de 20% en poids de «solide réduit» de propylène polymérisé. Après refroidissement et lavage du «solide réduit» ainsi prépolymérisé, la préparation du solide catalytique est poursuivie comme indiqué aux points B et C de l'exemple 1 du brevet BE-A-780 758.

On constate que les parois du réacteur de préparation du «solide réduit», sont après l'étape supplémentaire sus-mentionnée, couvertes d'un dépôt adhérent qui ne peut être éliminé que par lavage à chaud à l'hexane.

*Exemple 8*

On reproduit l'exemple 7 à la seule exception que le «solide réduit» suspendu dans le milieu de réduction est additionné, avant l'introduction du propylène, d'huile de silicone de marque RHODORSIL® Huile 47 V 300 à raison de 1 ‰ en poids par rapport au poids de «solide réduit».

Les parois du réacteur dans lequel s'effectue l'étape supplémentaire de prépolymérisation restent exemptes de tout dépôt à l'issue de cette dernière.

*Exemple 9*

On reproduit l'exemple 11 du brevet BE-A-803 875 (SOLVAY & Cie) en introduisant dans la suspension agitée à 25°C du solide catalytique 10 mg d'huile de silicone de marque RHODORSIL® Huile 47 V 300, avant l'admission du propylène gazeux.

On constate que, dans ces conditions, les parois du réacteur dans lequel s'effectue la prépolymérisation restent exemptes de dépôts.

## Revendications

1. Procédé pour l'inhibition du croûtage de réacteurs utilisés pour la polymérisation d'alpha-oléfines en présence de particules de solides catalytiques contenant du titane et du chlore à l'état combiné, caractérisé en ce qu'on opère la polymérisation en présence d'une quantité d'une huile de silicone inférieure à 1% en poids par rapport au poids de solide catalytique.

2. Procédé selon la revendication 1, caractérisé en ce que la quantité d'huile de silicone est compris entre environ 50 ppm et environ 5 000 ppm par rapport au poids de solide catalytique.

3. Procédé selon la revendication 1, caractérisé en ce que l'huile de silicone contient un composé répondant à la formule

$$\left[ \begin{array}{c} R \\ | \\ -Si-O- \\ | \\ R' \end{array} \right]_x$$

dans laquelle R et R' sont identiques ou différents et représentent un radical alkyle contenant de 1 à 5 atomes de carbone ou un radical aryle et dans laquelle x est compris entre 3 et 2 000.

4. Procédé selon la revendication 3, caractérisé en ce que R et R' représentent un radical méthyle et en ce que l'huile de silicone présente une viscosité cinématique comprise entre 0,5 et 2 · 10⁶ cSt (5 · 10⁻⁶ et 2 m²/s).

5. Procédé selon l'une quelconque des revendications 1 à 4, caractérisé en ce que l'alpha-oléfine est choisie parmi l'éthylène et le propylène.

6. Procédé selon l'une quelconque des revendications 1 à 5, caractérisé en ce qu'il est appliqué à une prépolymérisation.

7. Procédé selon l'une quelconque des revendications 1 à 6, caractérisé en ce que la polymérisation est effectuée en milieu liquide.

## Patentansprüche

1. Verfahren zum Hemmen der Krustenbildung von Reaktoren, die zur Polymerisation von α-Olefinen in Gegenwart von Teilchen von katalytischen Feststoffen, enthaltend Titan und Chlor in gebundenem Zustand, verwendet werden, dadurch gekennzeichnet, dass man die Polymerisation in Gegenwart einer Menge eines Silikonöles durchführt, die geringer ist als 1 Gew.-% bezogen auf das Gewicht des katalytischen Feststoffes.

2. Verfahren nach Anspruch 1, dadurch gekennzeichnet, dass die Menge des Silikonöles zwischen ungefähr 50 ppm und ungefähr 5000 ppm bezogen auf das Gewicht des katalytischen Feststoffes beträgt.

3. Verfahren nach Anspruch 1, dadurch gekennzeichnet, dass das Silikonöl eine Verbindung enthält, die der Formel

$$\left[\begin{array}{c} R \\ | \\ -Si-O- \\ | \\ R' \end{array}\right]_x$$

entspricht, worin R und R' identisch oder unterschiedlich sind und einen Alkylrest mit 1-5 Kohlenstoffatomen oder einen Arylrest darstellen und worin x zwischen 3 und 2000 beträgt.

4. Verfahren nach Anspruch 3, dadurch gekennzeichnet, dass R und R' einen Methylrest darstellen und dass das Silikonöl eine kinematische Viskosität zwischen $5 \cdot 10^{-6}$ und 2 m²/s aufweist.

5. Verfahren nach einem der Ansprüche 1-4, dadurch gekennzeichnet, dass das α-Olefin ausgewählt wird unter Ethylen und Propylen.

6. Verfahren nach einem der Ansprüche 1-5, dadurch gekennzeichnet, dass es auf eine Prepolymerisation angewendet wird.

7. Verfahren nach einem der Ansprüche 1-6, dadurch gekennzeichnet, dass die Polymerisation in einem flüssigen Milieu durchgeführt wird.

**Claims**

1. Process for inhibiting crust formation in reactors used for polymerising alpha-olefines in the presence of particles of catalytic solids containing titanium and chlorine in the combined state, characterised in that the polymerisation is carried out in the presence of an amount of a silicone oil which is less than 1 % by weight, relative to the weight of catalytic solid.

2. Process according to claim 1, characterised in that the amount of silicone oil is between about 50 ppm and about 5,000 ppm, relative to the weight of catalytic solid.

3. Process according to claim 1, characterised in that the silicone oil contains a compound corresponding to the formula:

$$\left[\begin{array}{c} R \\ | \\ -Si-O- \\ | \\ R' \end{array}\right]_x$$

in which R and R' are identical or different and represent an alkyl radical containing from 1 to 5 carbon atoms or an aryl radical, and in which x is between 3 and 2,000.

4. Process according to claim 3, characterised in that R and R' represent a methyl radical and in that the silicone oil has a kinematic viscosity of between 0.5 and $2 \cdot 10^6$ cSt ($5 \cdot 10^{-6}$ and 2 m²/s).

5. Process according to any one of claims 1 to 4, characterised in that the alpha-olefine is chosen from ethylene and propylene.

6. Process according to any one of claims 1 to 5, characterised in that it is applied to a prepolymerisation.

7. Process according to any one of claims 1 to 6, characterised in that the polymerisation is carried out in a liquid medium.